# EUROPEAN PATENT APPLICATION

(11) **EP 4 641 374 A1**
(43) Date of publication of application: **29.10.2025**
(21) Application number: 25172570.1
(22) Date of filing: 25.04.2025
(51) Int. Cl.: G06F 9/445, G06F 3/12

(54) **METHOD OF CONTROLLING INFORMATION PROCESSING APPARATUS, AND PROGRAM**

(30) Priority: 26.04.2024 JP 2024072930
(71) Applicant: CANON KABUSHIKI KAISHA, Tokyo 146-8501 (JP)
(72) Inventor: IURA, Masataka, Tokyo, 146-8501 (JP)
(74) Representative: TBK

(57) **Abstract**

A method for controlling a first information processing apparatus (101) and a second information processing apparatus (101), the first information processing apparatus (101) having a predetermined program capable of running on an operating system (OS) and having a first operating environment that is on a first OS running as a host OS, but is not on a guest OS, and the second information processing apparatus (101) having the predetermined program and having a second operating environment that is on a second OS running as the host OS, and is also on the guest OS.

## Description

### BACKGROUND OF THE INVENTION

### Field of the Invention

The present invention relates to a method of controlling an information processing apparatus, and a program.

### Description of the Related Art

Japanese Patent Laid-Open No. 2009-049679 describes a configuration in which two virtual computers, one running on an image processing apparatus OS (a host OS) and the other on a thin client OS (a guest OS), are implemented on memory.

### SUMMARY OF THE INVENTION

The present invention in its first aspect provides a method for controlling a first information processing apparatus and a second information processing apparatus as specified in claims 1 to 14.

The present invention in its second aspect provides a program as specified in claim 15.

According to the present invention, it is possible to improve the convenience of a program that can run in an operating environment that is on an OS running as a host OS and that is on a guest OS.

Further features of the present invention will become apparent from the following description of exemplary embodiments with reference to the attached drawings.

### BRIEF DESCRIPTION OF THE DRAWINGS

FIG. 1 is a diagram illustrating an example of the configuration of a communication system.
FIGS. 2A and 2B are diagrams illustrating the software configuration of an information processing apparatus.
FIGS. 3A and 3B are diagrams illustrating an example of the configuration of a communication system.
FIGS. 4A and 4B are flowcharts illustrating processing executed by a communication app.
FIG. 5 is a diagram illustrating a screen displayed by a communication app.
FIG. 6 is a diagram illustrating a screen displayed by a communication app.
FIGS. 7A and 7B are diagrams illustrating screens displayed by a communication app.
FIGS. 8A and 8B are flowcharts illustrating processing executed by a communication app.
FIG. 9 is a flowchart illustrating processing executed by a communication app.
FIG. 10 is a diagram illustrating a screen displayed by a communication app.
FIGS. 11A and 11B are diagrams illustrating screens displayed by a communication app.

### DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

Incidentally, with the spread of operating environments that are on an OS running as a host OS and that are on a guest OS, it is desirable to improve the convenience of a program capable of running in such an operating environment.

According to the present invention, it is possible to improve the convenience of a program that can run in an operating environment that is on an OS running as a host OS and that is on a guest OS.

### First Embodiment

An information processing apparatus and a communication apparatus included in a communication system according to the present embodiment will be described hereinafter. The present embodiment will describe a smartphone as an example of the information processing apparatus, but the information processing apparatus is not limited thereto, and any of a variety of devices, such as a mobile terminal, a laptop PC, a tablet terminal, a Personal Digital Assistant (PDA), a digital camera, or the like, may be applied thereto. Likewise, any of a variety of devices can be applied as the communication apparatus, as long as the device is capable of communicating with the information processing apparatus wirelessly. For example, if the device is a printer, the printer may be an ink jet printer, a full-color laser beam printer, a black and white printer, or the like. However, the device is not limited to a printer, and can be applied in a scanner, a copier, a facsimile device, a mobile terminal, a smartphone, a laptop PC, a tablet terminal, a PDA, a digital camera, a music playback device, a television, a smart speaker, or the like as well. The device can also be a multifunction peripheral provided with a plurality of functions, such as a copying function, a fax function, a printing function, a scanner function, and the like. The present embodiment will assume that the communication apparatus is a multifunction printer having a printing function, a scanner function, and the like.

### Hardware Configurations of Apparatuses

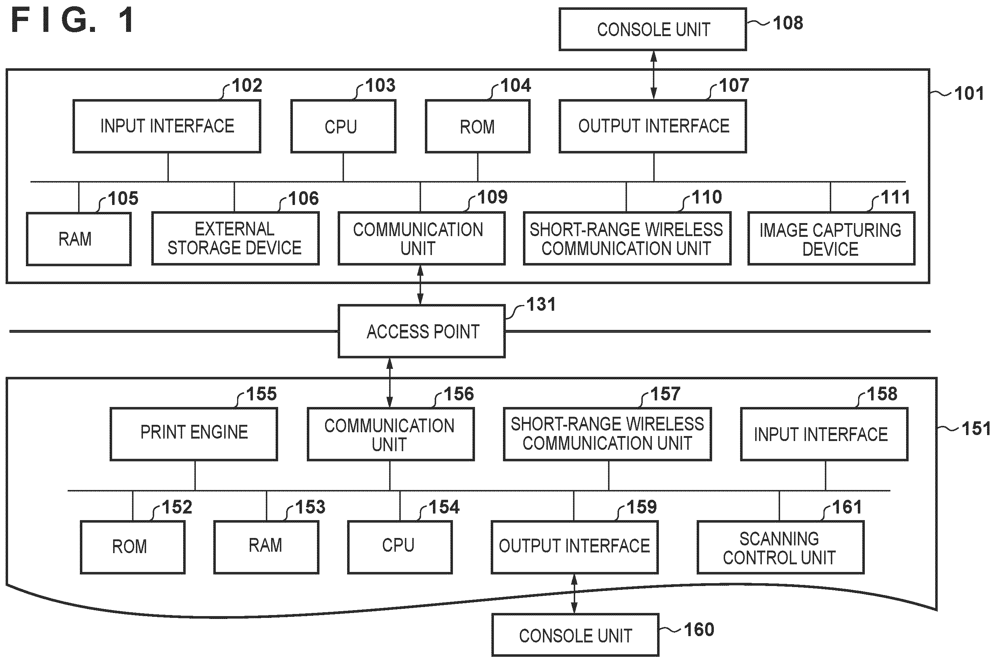

First, the configuration of the information processing apparatus included in the communication system of the present embodiment, and the configuration of a communication apparatus capable of communicating with the information processing apparatus, will be described with reference to the block diagram in FIG. 1. Although the present embodiment will describe an example having the following configuration, the functions are not intended to be limited particularly to the content of FIG. 1.

An information processing apparatus 101 includes an input interface 102, a CPU 103, a ROM 104, a RAM 105, an external storage device 106, an output interface 107, a console unit 108, a communication unit 109, a short-range wireless communication unit 110, an image capturing device 111, and the like. The input interface 102 is an interface for accepting data inputs, operational instructions, and the like from a user, and is constituted by a physical keyboard, display buttons, a touch panel, or the like. Note that the output interface 107 (described later) and the input interface 102 may be implemented by the same configuration, with that configuration both outputting screens and accepting operations from the user.

The CPU 103 is a system control unit, and controls the information processing apparatus 101 as a whole. The ROM 104 stores fixed data such as control programs executed by the CPU 103, data tables, an embedded operating system ("OS", hereinafter) program, and the like. In the present embodiment, the control programs stored in the ROM 104 perform software execution control, such as scheduling, task switching, interrupt processing, and the like, under the management of the embedded OS stored in the ROM 104. Note that the present embodiment assumes that the OS stored in the ROM 104 and run on the information processing apparatus 101 is the Android (registered trademark) OS or the Chrome (registered trademark) OS, both of which are provided by Google. If the OS running on the information processing apparatus 101 is the Chrome OS, the ROM 104 is assumed to also store a virtual Android OS for running Android OS apps (described later) on the information processing apparatus 101. Note that the OS running on the information processing apparatus 101 is not limited to the configuration described above, and may be another OS aside from the Android (registered trademark) OS or the Chrome (registered trademark) OS.

The RAM 105 is constituted by Static Random Access Memory (SRAM) or the like that requires a backup power source. Note that the RAM 105 holds data in a primary battery for data backup (not shown), and can therefore store important data such as program control variables in a non-volatile state. A memory area for storing setting information of the information processing apparatus 101, management data of the information processing apparatus 101, and the like is also provided in the RAM 105. The RAM 105 is used as a main memory and a working memory for the CPU 103.

The external storage device 106 includes an application program having a function for communicating with a communication apparatus 151 (called a "communication app" hereinafter). Specifically, for example, the communication app is an app having a printing function for causing the communication apparatus 151 to print, a scan function for causing the communication apparatus 151 to scan, and the like. The communication app is not limited thereto, however, and may be an app having only a printing function or a scan function (a printing app or a scanning app), or may be an app having other functions. For example, the communication app may be a setup app having a function for executing network setup processing for connecting the communication apparatus 151 to an external access point. The present embodiment assumes that the communication app includes the printing function, the scan function, and all of the functions for executing the network setup processing. The communication app also includes a print job sending function, a scan job sending function, a copy job sending function, and the like, which will be described later. The external access point is, for example, an access point 131, which will be described later. Additionally, the external storage device 106 includes various types of programs, such as a print information generation program that generates print information which can be interpreted by the communication apparatus 151, an information sending/receiving control program that sends and receives information to and from the connected communication apparatus 151 through the communication unit 109, and the like. These programs may be included in the app described above, or may be configured separately from the app. The external storage device 106 also stores various types of information used by these programs. The external storage device 106 also stores image data obtained from other information processing apparatuses or the Internet through the communication unit 109. The present embodiment assumes that the communication app is an Android OS app.

The output interface 107 is an interface for controlling the console unit 108 to display data, make notifications of the state of the information processing apparatus 101, and the like. The console unit 108 is constituted by light-emitting diodes (LEDs), a liquid crystal display (LCD), or the like, and displays data, makes notifications regarding the state of the information processing apparatus 101, and the like. Note that inputs from the user can be accepted through the console unit 108 by providing, in the console unit 108, a software keyboard including numerical value input keys, a mode setting key, a confirm key, a cancel key, a power key, and the like.

The communication unit 109 is connected to devices such as the communication apparatus 151, and is configured to communicate data. For example, the communication unit 109 is capable of connecting to an access point (not shown) in the communication apparatus 151. Connecting the communication unit 109 and the access point in the communication apparatus 151 enables the information processing apparatus 101 and the communication apparatus 151 to communicate with each other. The access point may be referred to as an "AP" hereinafter. Note that the communication unit 109 may communicate directly with the communication apparatus 151 wirelessly, or may communicate through an access point 131 outside the information processing apparatus 101 and the communication apparatus 151. The present embodiment assumes that the IEEE 802.11 series communication standard is used as the wireless communication method. The IEEE 802.11 series communication standard is Wi-Fi (registered trademark).

A device such as a wireless LAN router or the like can be given as an example of the access point 131. Note that a method in which the information processing apparatus 101 and the communication apparatus 151 connect directly without using an external access point will be referred to as a "direct connection method" in the present embodiment. A method in which the information processing apparatus 101 and the communication apparatus 151 connect via the external access point 131 will be referred to as an "infrastructure connection method".

The short-range wireless communication unit 110 is a configuration for wirelessly connecting to devices at a short distance, such as the communication apparatus 151, and communicating data, and communicates using a communication method different from that of the communication unit 109. The short-range wireless communication method used by the short-range wireless communication unit 110 is, for example, Bluetooth (registered trademark), Near Field Communication (NFC), or the like. The type of Bluetooth may be Bluetooth Classic or Bluetooth Low Energy. The short-range wireless communication unit 110 can connect to a short-range wireless communication unit 157 in the communication apparatus 151.

The image capturing device 111 is a device that converts images captured by an image sensor into digital data. The digital data is initially stored in the RAM 105. The digital data is then converted to a predetermined image format by a program executed by the CPU 103, and the resulting data is stored in the external storage device 106 as image data.

The communication apparatus 151 includes a ROM 152, a RAM 153, a CPU 154, a print engine 155, a communication unit 156, the short-range wireless communication unit 157, an input interface 158, an output interface 159, a console unit 160, a scanning control unit 161, and the like. When a connection mode (a communication mode) is set, the communication apparatus 151 can operate in the set connection mode.

The communication unit 156 is a configuration for the communication apparatus 151 to communicate with other devices, and in the present embodiment, the communication unit 156 communicates according to the IEEE 802.11 series communication standard. The communication unit 156 has an access point for connecting to devices such as the information processing apparatus 101 as an access point within the communication apparatus 151. The access point can connect to the communication unit 109 of the information processing apparatus 101. Note that the communication unit 156 may communicate directly with the information processing apparatus 101 wirelessly, or may communicate via the access point 131. Additionally, the communication unit 156 may include hardware that functions as an access point, or may operate as an access point using software for functioning as an access point. The present embodiment assumes that the communication unit 156 and the short-range wireless communication unit 157 are implemented as a single wireless chip. In other words, in the present embodiment, a combo chip is assumed to be used, which handles both an IEEE 802.11 series communication standard communication function and a short-range wireless communication-based communication function. However, the configuration is not limited thereto, and the communication unit 156 and the short-range wireless communication unit 157 may be implemented by separate wireless chips.

The RAM 153 is constituted by DRAM or the like that requires a backup power source. Note that the RAM 153 holds data by being supplied with power for data backup (not shown), and can therefore store important data such as program control variables in a non-volatile state. The RAM 153 is also used as a main memory and working memory for the CPU 154, and operates as a reception buffer for temporarily storing print information received from the information processing apparatus 101 or the like, stores various types of information, and the like.

The ROM 152 stores fixed data such as control programs executed by the CPU 154, data tables, OS programs, and the like. In the present embodiment, the control programs stored in the ROM 152 perform software execution control, such as scheduling, task switching, interrupt processing, and the like, under the management of the embedded OS stored in the ROM 152. A memory area for storing data required to be held even when power is not supplied, such as setting information of the communication apparatus 151, management data of the communication apparatus 151, and the like, is also provided in the ROM 152.

The CPU 154 is a system control unit, and controls the communication apparatus 151 as a whole. On the basis of the information stored in the RAM 153 and a print job received from the information processing apparatus 101 or the like, the print engine 155 forms an image on a recording medium such as paper using a recording agent such as ink, and the result of the printing is output. At this time, the print job sent from the information processing apparatus 101 or the like involves sending a large amount of data and requires high-speed communication, and is therefore received via the communication unit 156, which is capable of faster communication than the short-range wireless communication unit 157.

The short-range wireless communication unit 157 is a configuration for wirelessly connecting to devices at a short distance, such as the information processing apparatus 101, and communicating data, and communicates using a communication method different from that of the communication unit 156. The short-range wireless communication method used by the short-range wireless communication unit 157 is, for example, Bluetooth (registered trademark), NFC, or the like. The type of Bluetooth may be Bluetooth Classic or Bluetooth Low Energy. The short-range wireless communication unit 157 can connect to the short-range wireless communication unit 110.

The input interface 158 is an interface for accepting data inputs, operational instructions, and the like from a user, and is constituted by a physical keyboard, buttons, a touch panel, or the like. Note that the output interface 159 (described later) and the input interface 158 may be implemented by the same configuration, with that configuration both outputting screens and accepting operations from the user. The output interface 159 is an interface for controlling the console unit 160 to display data, make notifications of the state of the communication apparatus 151, and the like.

The console unit 160 is constituted by a display unit such as light-emitting diodes (LEDs), a liquid crystal display (LCD), or the like, and displays data, makes notifications regarding the state of the communication apparatus 151, and the like. Note that inputs from the user can be accepted through the console unit 160 by providing, in the console unit 160, a software keyboard including numerical value input keys, a mode setting key, a confirm key, a cancel key, a power key, and the like.

The scanning control unit 161 includes an image sensor unit (a reading unit) that scans a document placed on a document platform or an Automatic Document Feeder (ADF) (not shown). The image sensor unit includes a light source that irradiates the document with light, and an image sensor in which elements that read light reflected by the document and photoelectrically convert that light are arranged. The scanning control unit 161 obtains image data by analog-digital (AD) conversion of an analog electrical signal obtained by the image sensor unit reading the document. The scanning control unit 161 includes circuitry for direct memory access (DMA) transfer to store the obtained image data in the RAM 153.

### Direct Connection Method

"Direct connection" refers to a form in which devices connect directly to each other (i.e., peer-to-peer) wirelessly, without going through an external apparatus such as the access point 131. The communication apparatus 151 can operate in a mode for communicating over a direct connection (a "direct connection mode") as one connection mode. Wi-Fi communication includes a plurality of modes for communicating over a direct connection, such as software AP mode, Wi-Fi Direct (registered trademark) mode, and the like. Wi-Fi Direct will be referred to as "WFD" hereinafter.

A mode in which a direct connection is made through WFD is called "WFD mode". WFD is a standard developed by the Wi-Fi Alliance and is included in the IEEE 802.11 series communication standard. In WFD mode, a device to serve as a communication partner is searched for using device search information, after which the roles of P2P group owner (GO) and P2P client are determined, and the remaining wireless connections are processed. "Group owner" corresponds to the parent station (parent device) in Wi-Fi, and the client corresponds to a child station (child device) in Wi-Fi. This role determination corresponds to GO Negotiation in P2P, for example. In WFD mode, the communication apparatus 151 is neither the parent station nor the child station before the roles have been determined. Specifically, one device among the devices that are to communicate issues the device search information, and searches for a device to connect to in WFD mode. When the other device, which is to serve as the communication partner, is discovered, the devices confirm information pertaining to the services and functions those respective devices can supply. Note that the confirmation of the device supply information is optional, and is not required. The device supply information confirmation phase corresponds to Provision Discovery in P2P, for example. Next, which device will serve as the P2P client and which will serve as the P2P group owner is determined by confirming this device supply information with each other. Once the client and the group owner have been determined, the devices exchange parameters for communicating through WFD. The remaining wireless connections and IP connections are processed between the P2P client and group owner on the basis of the exchanged parameters. Note that in WFD mode, the communication apparatus 151 may skip the GO Negotiation described above, and the communication apparatus 151 may always operate as the GO. In other words, the communication apparatus 151 may operate in Autonomous GO mode, which is a WFD mode. A state in which the communication apparatus 151 is operating in WFD mode is a state in which, for example, a connection using WFD is not established but the communication apparatus 151 is operating as the GO, a connection using WFD is established and the communication apparatus 151 is operating as the GO, or the like.

In the software AP mode, among the communicating devices (e.g., the information processing apparatus 101 and the communication apparatus 151), one of the devices (e.g., the information processing apparatus 101) functions as a client that has a role of requesting various types of services. The other device provides a Wi-Fi access point function through software settings. The software AP corresponds to the parent station in Wi-Fi, and the client corresponds to the child station in Wi-Fi. In software AP mode, the client uses the device search information to search for a device that will serve as a software AP. Once a software AP is discovered, the remaining wireless connection processing (the establishment of a wireless connection and the like) is performed between the client and the software AP, after which IP connection processing (IP address allocation and the like) is performed. Note that commands, parameters, and the like sent and received when establishing a wireless connection between the client and the software AP may be any specified by the Wi-Fi standard, and will therefore not be described here.

In the present embodiment, when establishing and maintaining a direct connection, the communication apparatus 151 operates as the parent station in the network to which the communication apparatus 151 belongs. Note that "parent station" refers to a device that constructs a wireless network, and is a device that provides child stations with the parameters used to connect to the wireless network. The parameters used to connect to the wireless network are parameters pertaining to a channel used by the parent station, for example. By receiving these parameters, a child station connects to the wireless network constructed by the parent station using the channel used by the parent station. In direct connection mode, the communication apparatus 151 operates as the parent station, and the communication apparatus 151 can therefore determine which frequency band and which channel to use in the communication performed in direct connection mode. In the present embodiment, the communication apparatus 151 is assumed to use a channel corresponding to the 2.4 GHz frequency band and a channel corresponding to the 5 GHz frequency band in the communication performed in direct connection mode. The user can then set the frequency band to be used (i.e., the frequency band channel to be used) as desired by making a setting in the screen displayed by the communication apparatus 151. However, the present embodiment assumes that even if 5 GHz is selected in the screen displayed by the communication apparatus 151, the communication apparatus 151 will not use a channel corresponding to a Dynamic Frequency Selection (DFS) band in the 5 GHz frequency band for the communication performed in direct connection mode. In other words, the communication apparatus 151 is assumed to use only channels corresponding to frequency bands outside the DFS band in the 5 GHz frequency band for the communication performed in direct connection mode. If, when using a channel corresponding to the DFS band, a radar wave is detected in the frequency band corresponding to that channel, it is necessary to change the channel currently being used. A frequency band in which the channel may be changed in response to a radar wave being detected is called a "DFS band". Note, however, that it may be possible to use a channel corresponding to the DFS band among the 5 GHz frequency band for communication performed in direct connection mode when, for example, using a wireless chip that supports the DFS function.

### Infrastructure Connection Method

"Infrastructure connection" is a type of connection for devices which are to communicate (e.g., the information processing apparatus 101 and the communication apparatus 151) to connect to an access point overseeing the network of those devices (e.g., the access point 131) and communicate with each other via the access point. The communication apparatus 151 is also capable of operating in a mode for communicating over an infrastructure connection (infrastructure connection mode) as one connection mode.

In an infrastructure connection, each device uses device search information to search for an access point. Once an access point is discovered, the remaining wireless connection processing (the establishment of a wireless connection and the like) is performed between the devices and the access point, after which IP connection processing (IP address allocation and the like) is performed. Note that commands, parameters, and the like sent and received when establishing a wireless connection between the devices and the access point may be any specified by the Wi-Fi standard, and will therefore not be described here.

In the present embodiment, when the communication apparatus 151 operates in infrastructure connection mode, the access point 131 operates as the parent device, and the communication apparatus 151 operates as a child device. In other words, in the present embodiment, "infrastructure connection" refers to a connection between the communication apparatus 151, which operates as a child device, and a device operating as a parent device. When the communication apparatus 151 has established an infrastructure connection and the information processing apparatus 101 has also established an infrastructure connection with the access point 131, the communication apparatus 151 and the information processing apparatus 101 can communicate via the access point 131. The channel used for communication in the infrastructure connection is determined by the access point 131, and thus the communication apparatus 151 communicates in the infrastructure connection using the channel determined by the access point 131. In the present embodiment, the communication apparatus 151 is assumed to use a channel corresponding to the 2.4 GHz frequency band and a channel corresponding to the 5 GHz frequency band in the communication performed in the infrastructure connection. Note that the communication apparatus 151 can also use a channel corresponding to the DFS band and the 5 GHz frequency band in the communication performed in the infrastructure connection. Note also that to communicate with the communication apparatus 151 via the access point 131, it is necessary for the information processing apparatus 101 to recognize that the communication apparatus 151 belongs to the network formed by the access point 131 and to which the information processing apparatus 101 belongs. Additionally, when the information processing apparatus 101 and the communication apparatus 151 are connected to the access point 131 by an infrastructure connection, the communication apparatus 151 can be discovered through a broadcast made by the information processing apparatus 101.

### Network Setup Mode

The communication apparatus 151 is capable of operating in a network setup mode. The trigger for the communication apparatus 151 to start operating in the network setup mode may be, for example, a user pressing a network setup mode button, or the communication apparatus 151 being started (powered on) for the first time after being shipped. The network setup mode button may be a hardware (physical) button provided in the communication apparatus 151, or may be a software button displayed by the communication apparatus 151 in the console unit 160.

When the communication apparatus 151 starts operating in the network setup mode, Wi-Fi communication is enabled. Specifically, the communication apparatus 151 enables an internal AP of the communication apparatus 151 (a connection configuration AP), which is specifically for the network setup mode, as processing for enabling Wi-Fi communication. This enables the communication apparatus 151 to establish a direct connection with the information processing apparatus 101 using Wi-Fi. Connection information (a Service Set Identifier (SSID), a password, or the like) for connecting to the connection configuration AP is assumed to be held in advance in a communication app installed in the information processing apparatus 101, and the information processing apparatus 101 is assumed to have recognized the connection information for connecting to the connection configuration AP. Accordingly, unlike the connection information of the AP enabled in the direct connection mode, it is assumed that the connection information for connecting to the connection configuration AP cannot be changed by the user as desired. Note that in the network setup mode, the communication apparatus 151 may connect to the information processing apparatus 101 using Wi-Fi Direct (WFD) instead of normal Wi-Fi. In other words, the communication apparatus 151 may operate as the Group Owner and receive setting commands from the information processing apparatus 101 through communication using WFD. Additionally, in the network setup mode, the communication apparatus 151 may connect to the information processing apparatus 101 using Bluetooth. Here, "Bluetooth" includes Bluetooth Classic, Bluetooth Low Energy (BLE), and the like. In other words, for example, in the network setup mode, the communication apparatus 151 may operate as a slave device according to BLE, and receive setting commands from the information processing apparatus 101 through communication using BLE. Additionally, in the network setup mode, the communication apparatus 151 may be capable of performing both network setup using Wi-Fi and network setup using BLE. In other words, when the communication apparatus 151 starts operating in the network setup mode, both Wi-Fi communication and BLE communication may be enabled. Specifically, when the communication apparatus 151 starts operating in the network setup mode, both (i) the connection configuration AP may be enabled, and (ii) an advertising state, in which a BLE connection is enabled by sending advertising information using BLE, may be enabled.

When operating in the network setup mode, the communication apparatus 151 controls the communication unit 156 to operate as a network setup access point (connection configuration AP, setup access point), which is enabled only while operating in the network setup mode. The setup access point is a different access point from the access point enabled in the software AP mode described above. The SSID of the setup access point is assumed to include a predetermined character string that can be recognized by the communication app of the information processing apparatus 101.

Additionally, the communication apparatus 151 operating in the network setup mode is assumed to use a predetermined communication protocol (a setup communication protocol) in the communication with the information processing apparatus 101, which is connected to the setup access point. Specifically, the setup communication protocol is Simple Network Management Protocol (SNMP), for example.

Once a predetermined amount of time has passed after the communication apparatus 151 starts operating in the network setup mode, the communication apparatus 151 stops operating in the network setup mode and disables the setup access point. The communication apparatus 151 also disables the setup access point upon receiving, from the information processing apparatus 101 currently in the network setup mode, connection information for connecting to the access point 131 and an instruction to change the operation mode of the wireless communication. It is also assumed that the setup access point is an access point that does not require a password for connection. Note, however, that the setup access point may be an access point that requires a password. In this case, it is assumed that the password used to connect to the setup access point is a fixed password (which cannot be changed by the user) with which the communication app is provided in advance.

In the following descriptions, a communication mode in which the information processing apparatus 101 and the communication apparatus 151 are connected directly without going through the access point 131 may be called a "direct connection". Additionally, a communication mode in which the information processing apparatus 101 and the communication apparatus 151 are connected to an external access point may be called an "infrastructure connection".

### Software Configuration of Information Processing Apparatus 101

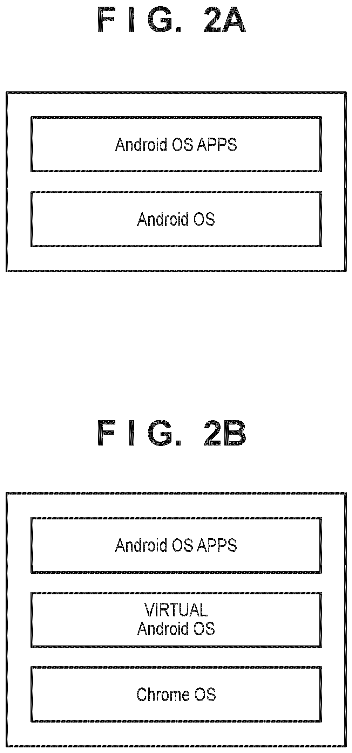

The software configuration of the information processing apparatus 101 according to the present embodiment will be described next. FIG. 2A illustrates an example of the software configuration of the information processing apparatus 101 when the host OS running on the information processing apparatus 101 is the Android OS (a first OS). In this configuration, Android OS apps run on the Android OS. Here, it is assumed that the software configuration of the information processing apparatus 101 does not include the Chrome OS. An environment in which the OS running on the lowest layer of the information processing apparatus 101 is the Android OS (i.e., is not the Chrome OS), as in this case, will be called a "first environment" ("first operating environment") hereinafter. Specifically, the first environment is an environment in which, for example, the information processing apparatus 101 is provided with a host OS but not with a guest OS, and the app runs on the host OS. Additionally, the first environment is, for example, an environment in which the information processing apparatus 101 is provided with both a host OS and a guest OS, but the app running in the present embodiment runs on the host OS but runs without going through the guest OS (does not run on the guest OS). Note that "host OS" is an abbreviation for "host operating system", and "guest OS" is an abbreviation for "guest operating system".

FIG. 2B illustrates an example of the software configuration of the information processing apparatus 101 when the host OS running on the information processing apparatus 101 is the Chrome OS (a second OS). In this configuration, a virtual Android OS, which is a virtual OS, runs on the Chrome OS. Android OS apps run on the virtual Android OS. An environment in which the OS running on the lowest layer of the information processing apparatus 101 is the Chrome OS and a virtual Android OS is running on the Chrome OS, as in this case, will be called a "second environment" ("second operating environment") hereinafter. Note that in the present embodiment, the "virtual OS" is a program for running apps not supported by the host OS on the host OS, and is a guest OS. The virtual OS may be an entire existing OS, such as the Android OS or the like, an OS obtained by omitting some modules from an entire existing OS, or a program created separately from an existing OS. The virtual OS is implemented through virtualization techniques such as a Virtual Machine, a container-based technique, or the like, for example. The information processing apparatus 101 having the first environment and the information processing apparatus 101 having the second environment are assumed to be separate information processing apparatuses 101. In other words, the processing executed based on the fact that the communication app is running in the first environment (described later) is processing executed by a first information processing apparatus 101 having the first environment. Likewise, the processing executed based on the fact that the communication app is running in the second environment (described later) is processing executed by a second information processing apparatus 101 having the second environment. However, for example, installing and uninstalling the host OS, the guest OS, and the like in a single information processing apparatus 101 may be performed to switch between a state where the first environment is constructed in the information processing apparatus 101, and a state where the second environment is constructed in the information processing apparatus 101. In other words, both the processing executed on the basis of the communication app running in the first environment and the processing executed on the basis of the communication app running in the second environment may be executed on a single information processing apparatus 101, on the basis of the environment constructed in the single information processing apparatus 101. Although the present embodiment describes a configuration in which the host OS is the Chrome OS or the Android OS, and the guest OS is a virtual Android OS, the configuration is not limited thereto. The host OS may be the Chrome OS or another OS that is not the Android OS, and the guest OS may be another OS that is not a virtual Android OS.

The Android OS app will be described hereinafter. Note that the aforementioned communication app will be described as an example of the Android OS app. An example in which the communication app is installed and run in both the first environment and the second environment will be described here. Note that the communication app will be described, as one example, as a printing app that provides a function for communicating with the communication apparatus 151, which has a printing function, and causing the communication apparatus 151 to print data such as documents, images, and the like. Apps developed for the Android OS so as to be supported by the Android OS may be referred to as "Android apps".

### Example of Configuration of Communication System

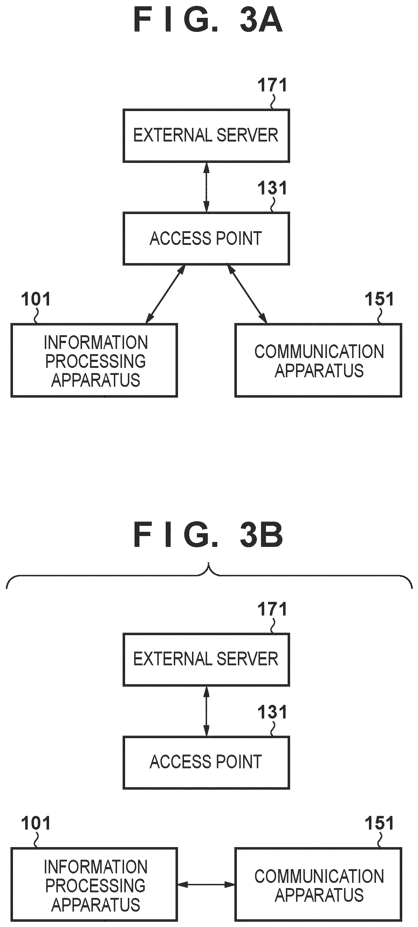

An example of the configuration of the communication system according to the present embodiment will be described with reference to FIGS. 3A and 3B. As illustrated in FIGS. 3A and 3B, the communication system includes an external server 171, for example. The external server 171 may be, for example, a management server managed by the provider of the communication app and the communication apparatus 151. The external server 171 can provide a file requested by the communication app installed in the information processing apparatus 101 over, for example, a Wi-Fi network formed by the access point 131.

The communication modes of a plurality of apparatuses capable of communicating with each other in the communication system illustrated in FIGS. 3A and 3B will be described hereinafter. FIG. 3A illustrates a situation where the information processing apparatus 101, the communication apparatus 151, and the external server 171 all belong to a Wi-Fi network formed by the access point 131. In other words, this is a communication mode in which the information processing apparatus 101 and the communication apparatus 151 are capable of communicating over an infrastructure connection through the access point 131.
In such a case, the information processing apparatus 101 can communicate with the external server 171 through the access point 131. For example, when a predetermined instruction such as an instruction to launch the communication app has been received, the communication app displays a screen indicating that the instruction has been received. The communication app then communicates with the external server 171 through the OS of the information processing apparatus 101. In the present embodiment, the communication app performs communication for downloading a file, such as a file used for display control for switching the screen when the app is launched, from the external server 171.
The communication app then performs display control to switch the screen display on the basis of the downloaded file by communicating with the external server 171.

In FIG. 3B, the information processing apparatus 101 belongs to the Wi-Fi network formed by the communication apparatus 151. In other words, the information processing apparatus 101 and the communication apparatus 151 are connected directly without going through the network formed by the access point 131. In such a case, the communication app communicates with the external server 171 through the OS of the information processing apparatus 101, but the communication cannot be performed and an error occurs. Accordingly, the communication app fails the attempt of the download of the file mentioned above, for example. The communication app performs display control for a situation where communication with an external server 171 cannot be performed, for example.

Incidentally, the operating environment of the communication app includes the first environment and the second environment as described above, for example. For example, when the communication app runs in the first environment, it takes relatively little time to recognize that an error such as that described with reference to FIG. 3B has occurred. On the other hand, when, for example, the communication app runs in the second environment, and the information processing apparatus 101 and the communication apparatus 151 are in a direct connection, it may take some time to recognize that an error has occurred. In such a case, it takes time for the communication app to perform display control based on the fact that communication with the external server 171 was not possible. It is therefore necessary to improve the convenience of programs, such as the communication app, that are capable of running in the second environment.

In the present embodiment, when the communication app is in the first environment, the communication app performs control to communicate with the external server 171 through the OS of the information processing apparatus 101. On the other hand, when the communication app is in the second environment, and the information processing apparatus 101 belongs to a network formed by the communication apparatus 151, the communication app performs control to not perform the communication.

Such a configuration makes it possible to prevent errors from occurring when the communication app communicates with the external server 171 and processing such as display control takes more time in, for example, a state where the communication app is running in the second environment and belongs to the network formed by the communication apparatus 151. This makes it possible to improve the convenience of a program which is capable of running in the second environment.

### Example of Processing by Communication App

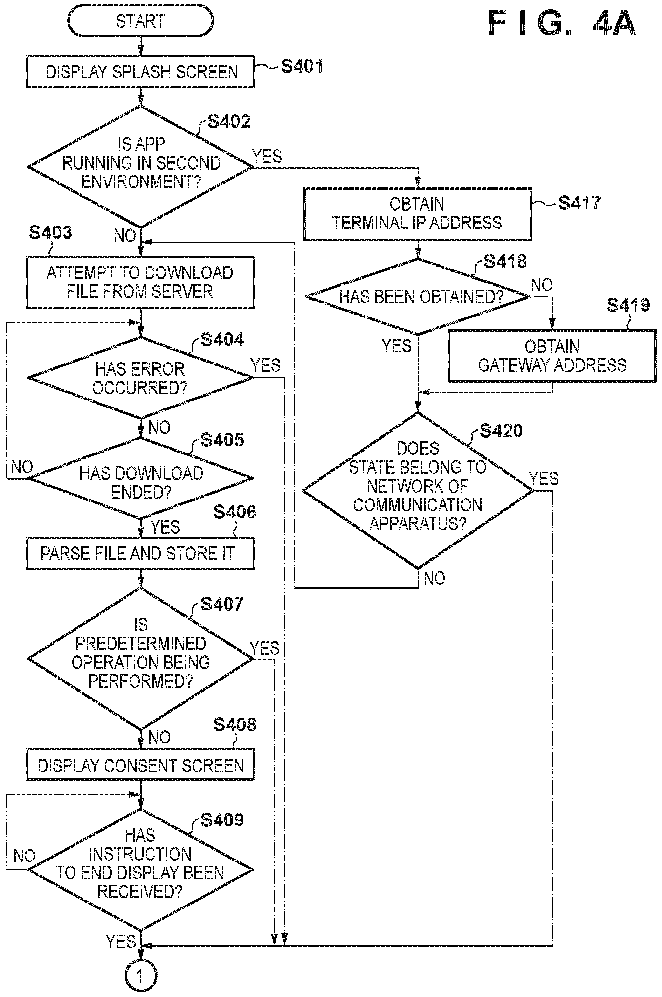

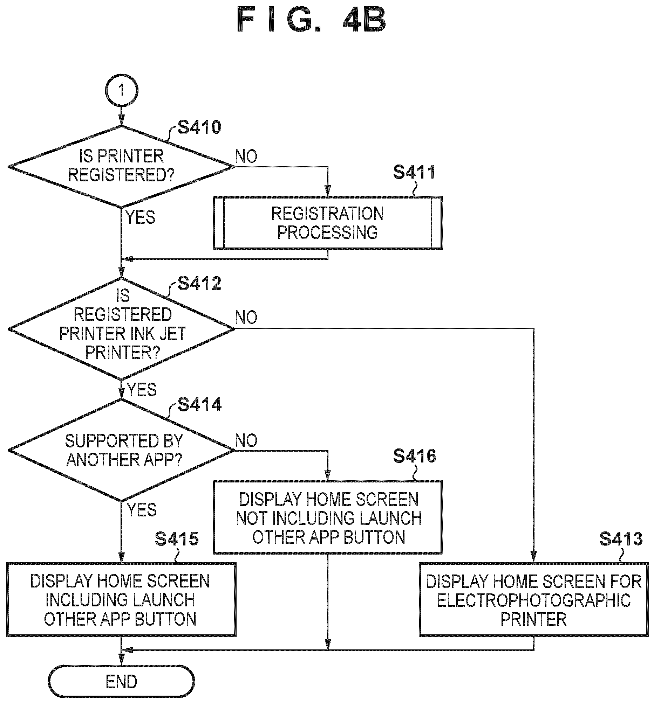

Refer to FIGS. 4A and 4B. FIGS. 4A and 4B are flowcharts illustrating an example of processing executed by the communication app. In this flowchart, the processing executed by the communication app is realized by, for example, the CPU 103 loading a control program stored in a memory such as the ROM 104 into the RAM 105 and executing the program. The processing illustrated in FIGS. 4A and 4B are executed when the communication app is launched in response to a user operation, for example. A case where the communication app is installed and run in both the first environment and the second environment will be described hereinafter. Note that in the following descriptions, the network formed by the communication apparatus 151 may be called a network of the communication apparatus 151.

### Example of Processing when Communication App Runs in First Environment

Processing performed when the communication app runs in the first environment will be described first. Note that when the communication app is running in the first environment and the processing is executed through the OS of the information processing apparatus 101, the OS is, for example, the host OS (the first OS).

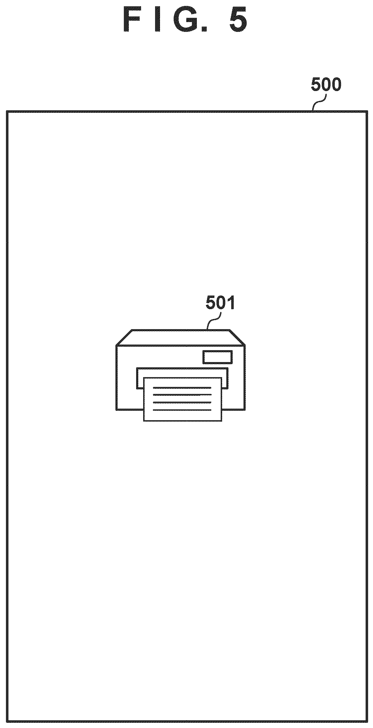

In step S401, the communication app displays a splash screen in the console unit 108 on the basis of an instruction to launch having been received. Here, the descriptions will refer to FIG. 5. FIG. 5 illustrates an example of a splash screen 500 displayed by the communication app in step S401. An icon 501 indicating the communication apparatus 151 associated with the communication app may be displayed in the splash screen 500, for example. Although the present embodiment describes an example in which the icon 501 is displayed in the splash screen 500, the configuration is not limited thereto. A logo of the provider of the communication app, the name of the communication app, the status of processing executed by the communication app, and the like may be displayed in the splash screen 500, for example.

In step S402, the communication app determines whether the communication app is running in the second environment. In other words, in step S402, the communication app makes an environment determination. If the communication app determines that the communication app is running in the second environment, the sequence moves to step S417. However, if the communication app determines that the communication app is not running in the second environment, the sequence moves to step S403.

To be more specific, in step S402, the communication app obtains environment information pertaining to the environment in which the communication app is running by executing an API of the OS of the information processing apparatus 101. For example, if the environment in which the communication app is running is the first environment, the API executed is an API of the host OS (the first OS), and information corresponding to the first environment is obtained as the environment information. Accordingly, when running in the first environment, the communication app determines that the communication app is not running in the second environment. On the other hand, if, for example, the environment in which the communication app is running is the second environment, the API executed is a guest OS (virtual Android OS) API, and information corresponding to the second environment is obtained as the environment information. Accordingly, when running in the second environment, the communication app determines that the communication app is running in the second environment.

Here, it is assumed that the communication app runs in the first environment. Accordingly, the following will describe a case where in step S402 of this example, the communication app is determined not to be running in the second environment, and the sequence moves to step S403.

In step S403, the communication app communicates with the external server 171 through the OS of the information processing apparatus 101. In other words, in step S403, the communication app performs communication execution processing. In the present embodiment, the communication is communication for downloading a file from the external server 171.

The file downloaded from the external server 171 includes information pertaining to a privacy policy, for example. The privacy policy is a policy for the handling of personal information. This information includes, for example, the version of the privacy policy, a URL for displaying a web page where the privacy policy is written, and the like.

The file also includes a list indicating the model of the communication apparatus 151 corresponding to another app different from the communication app. This list will be described in detail later.

In step S404, the communication app determines whether an error has occurred as a result of the attempt to download the file. If the communication app determines that an error has occurred, the sequence moves to step S410. However, if the communication app determines that an error has not occurred, the sequence moves to step S405. Specifically, the communication app makes this determination on the basis of whether an error has occurred from the OS of the information processing apparatus 101.

In step S405, the communication app determines whether the download of the file has ended. If the communication app determines that the download has ended, the sequence moves to step S406. However, if the communication app determines that the download has not ended, the sequence moves to step S404. Specifically, the communication app makes this determination on the basis of whether a notification that the download has ended has been made from the OS of the information processing apparatus 101.

In step S406, the communication app parses (analyzes) the file. The communication app stores the parsed file in a memory such as the ROM 104.

In step S407, the communication app determines whether a predetermined operation is being performed. If the communication app determines that the predetermined operation is being performed, the sequence moves to step S410. However, if the communication app determines that the predetermined operation is not being performed, the sequence moves to step S408. The "predetermined operation" includes, for example, either a user operation for consenting to the privacy policy described above, or a user operation for not consenting to the privacy policy.

In step S407, for example, the communication app makes the determination on the basis of the file stored in step S406. As described above, the file downloaded by the communication app from the external server 171 and stored in a memory such as the ROM 104 includes the version of the privacy policy. The communication app confirms whether the same version as the newly-stored version is already stored. If the same version is already stored, the communication app determines that the predetermined operation is being performed. On the other hand, if the same version as the newly-stored version is not already stored, the communication app determines that the predetermined operation is not being performed.

In step S408, the communication app displays a consent screen (not shown) in the console unit 108 on the basis of the downloaded file. The consent screen (not shown) is a screen for requesting the user to consent to the privacy policy. For example, an overview of the privacy policy, a link button for displaying a web page where the privacy policy is written, and the like are displayed in the consent screen (not shown). The link button is displayed associated with a URL of the web page displayed when the link button is operated. Furthermore, in the present embodiment, it is assumed that the URL associated with the link button is included in the downloaded file. In other words, in the present embodiment, the content of the URL associated with the link button displayed in the consent screen is assumed to be controlled on the basis of the downloaded file. Note that the display content itself of the consent screen may be controlled on the basis of the downloaded file. For example, if the URL is displayed in the consent screen, the displayed URL may be controlled on the basis of the downloaded file. When the link button is operated by the user, the communication app launches the web browser and controls the web page to be displayed by the web browser according to the URL associated with the link button. In addition, an interface (e.g., a check box) capable of accepting an instruction as to whether to consent to the privacy policy, an interface (e.g., an OK button) capable of accepting an instruction to end the display of the consent screen (not shown), and the like are displayed in the consent screen (not shown).

In step S409, the communication app determines whether an instruction to end the display of the consent screen (not shown) has been received. If the communication app determines that the instruction has been received, the sequence moves to step S410. However, if the communication app determines that the instruction has not been received, the determination of step S409 is executed again.

In step S410, the communication app determines whether the communication apparatus 151 is registered in the communication app. If the communication app determines that the communication apparatus 151 is registered, the sequence moves to step S412. However, if the communication app determines that the communication apparatus 151 is not registered, the sequence moves to step S411. For example, when the processing illustrated in FIGS. 4A and 4B are executed the first time the communication app is launched after being installed in the information processing apparatus 101, the communication apparatus 151 is determined not to be registered in step S410.

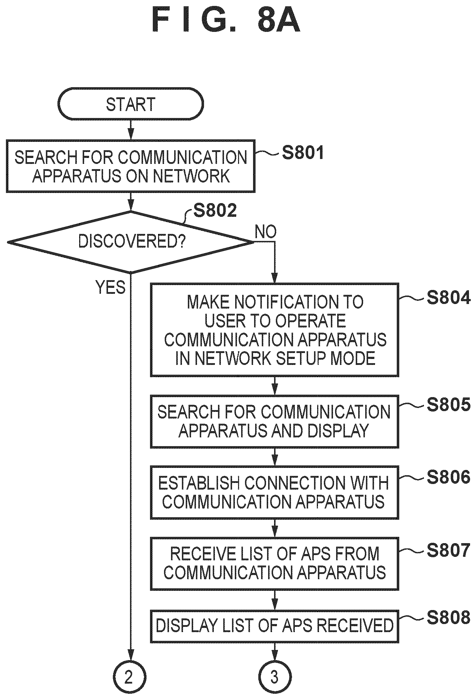

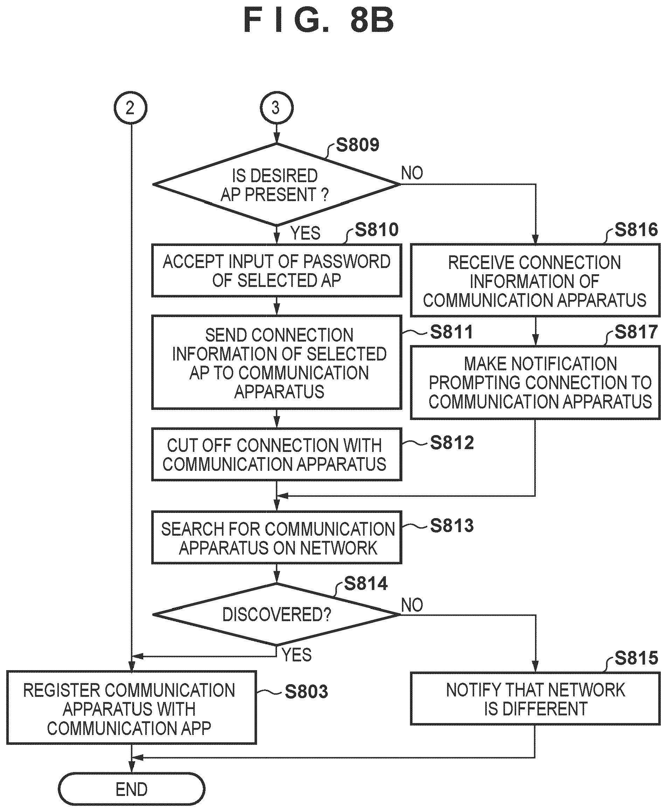

In step S411, the communication app performs registration processing for the communication apparatus 151. The registration processing will be described later with reference to FIGS. 8A and 8B. The communication app obtains information pertaining to the communication apparatus 151 through the registration processing. The information pertaining to the communication apparatus 151 includes, for example, model information of the communication apparatus 151, information indicating the printing method used by the communication apparatus 151, and the like.

In step S412, the communication app determines whether the communication apparatus 151 registered in the communication app is an ink jet printer. If the communication app determines that the communication apparatus 151 is an ink jet printer, the sequence moves to step S414. However, if the communication app determines that the communication apparatus 151 is not an ink jet printer, the sequence moves to step S413. Specifically, in step S412, the communication app makes the determination on the basis of the information indicating the printing method of the communication apparatus 151, obtained in the registration processing. In other words, in step S412, the communication app determines whether the communication apparatus 151 registered in the communication app is a printer that uses a predetermined printing method.

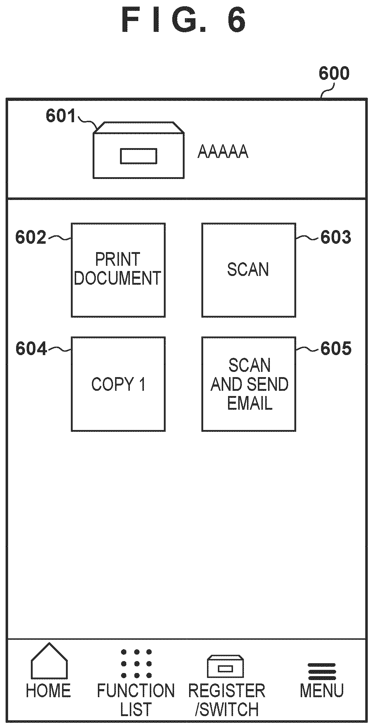

In step S413, the communication app displays, in the console unit 108, a home screen for an electrophotographic (toner-based) printer. Here, the descriptions will refer to FIG. 6. FIG. 6 illustrates an example of a home screen 600 displayed in step S413. Information 601 indicating the communication apparatus 151 registered in the communication app, interfaces 602 to 605 capable of accepting an instruction to execute a corresponding function provided by the communication app, and the like are displayed in the home screen 600 displayed by the communication app.

The information 601 indicating the communication apparatus 151 may be, for example, an icon, model information such as a model name, or the like of the communication apparatus 151 registered in the communication app.

A document print button 602 is an interface capable of accepting an instruction to execute the print job sending function for a document file (a document printing function), for example. The print job sending function is a function for sending, to the communication apparatus 151, a print job for causing the communication apparatus 151 to print image data selected by the user in the information processing apparatus 101, for example. For example, when the user presses the document print button 602, the user can select a document file to be printed in the information processing apparatus 101, and make print settings, an instruction to execute printing, and the like.

The document file is a file in a data format corresponding to the print job sending function. For example, the data format corresponding to the document file (the data format which the communication app can print using the document printing function) may be a data format corresponding to the Portable Document Format ("PDF", hereinafter), a data format corresponding to Microsoft Word, a data format corresponding to Microsoft Excel, a data format corresponding to Microsoft PowerPoint, or the like. Note that the data format is not limited to these, and may be another data format.

A scan button 603 is an interface capable of accepting an instruction to execute the scan job sending function, for example. The scan job sending function is a function for sending, to the communication apparatus 151, a scan job for causing the communication apparatus 151 to execute a scan and send image data obtained through the scan to the information processing apparatus 101, for example.

A copy 1 button 604 is an interface capable of accepting an instruction to execute the copy job sending function, for example. The copy job sending function is a function for sending, to the communication apparatus 151, a print job for causing the communication apparatus 151 to print image data captured by the information processing apparatus 101, for example.

An email sending button 605 is an interface capable of accepting an instruction to execute an email app sending function, for example. The email app sending function is a function for instructing the OS to launch an email app installed in the information processing apparatus 101, for example. An email app launching function is a function for receiving image data obtained by the scan from the communication apparatus 151 and attaching the image data to an email, by executing a function similar to the scan job sending function.

The descriptions will now return to FIG. 4B. In step S414, the communication app determines whether the communication apparatus 151 being registered is a model supported by another app different from the communication app. If the communication app determines that the model is supported by another app, the sequence moves to step S415. However, if the communication app determines that the model is not supported by another app, the sequence moves to step S416.

Specifically, in step S414, the communication app makes the determination (a registration determination) on the basis of a list indicating the models of the communication apparatus 151 supported by the printing app included in the file downloaded from the external server 171 and information pertaining to the communication apparatus 151 (described later). For example, if the model of the registered communication apparatus 151 is included in the list, the communication app determines that the model is supported by another app. However, if the model of the registered communication apparatus 151 is not included in the list, the communication app determines that the model is not supported by another app.

In step S415, the communication app displays, in the console unit 108, a home screen capable of accepting an instruction to launch the other app. In step S416, the communication app displays, in the console unit 108, a home screen not capable of accepting an instruction to launch the other app.

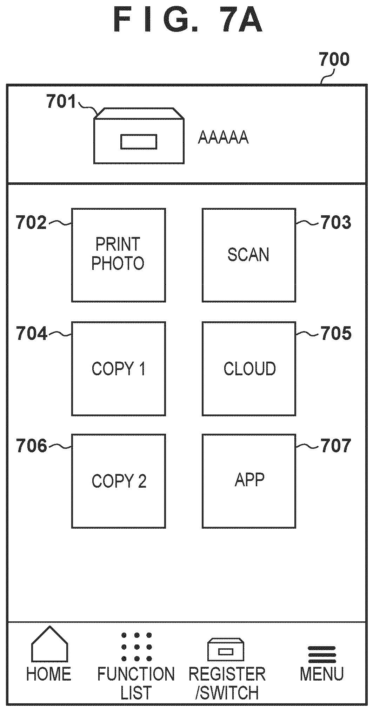

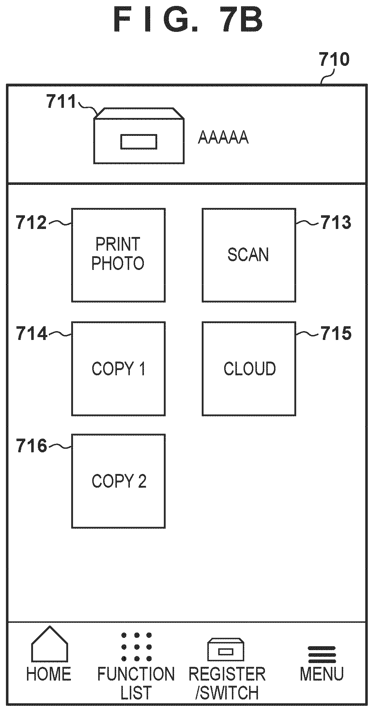

Here, the descriptions will refer to FIGS. 7A and 7B. FIG. 7A illustrates an example of a home screen 700 displayed by the communication app in step S415. FIG. 7B illustrates an example of a home screen 710 displayed by the communication app in step S416.

Information 701 indicating the communication apparatus 151 registered in the communication app, interfaces 702 to 707 capable of accepting an instruction to execute a corresponding function provided by the communication app, and the like are displayed in the home screen 700 illustrated in FIG. 7A. Descriptions corresponding to those given of the home screen 600 in FIG. 6 will be omitted here.

A cloud button 705 is an interface capable of accepting an instruction to start the execution of a cloud function, for example. The "cloud function" is a function that causes the communication apparatus 151 to execute predetermined processing through the external server 171, for example. The predetermined processing is printing, for example.

For example, when the user uses the cloud function for the first time, the communication apparatus 151 is first registered with the external server 171 on the Internet. After that, the user can use the communication app to cause the communication apparatus 151 to execute printing by sending a print job from the information processing apparatus 101 to the registered communication apparatus 151 via the external server 171. In other words, the cloud function is a printing service that uses the cloud, for example.

A copy 2 button 706 is a function for sending, to the communication apparatus 151, a copy job for causing the communication apparatus 151 to execute a copy (scan), for example.

An app button 707 is an interface capable of accepting an instruction to execute an app launching function, for example. The app launching function is a function for instructing the OS of the information processing apparatus 101 to launch another app, installed in the information processing apparatus 101, that is different from that of the communication apparatus 151, for example.

The other app is, for example, a printing app for causing the communication apparatus 151 to print predetermined image data. Specifically, the other app provides a function for downloading a template from the external server 171 or the like as the predetermined image data, for example. The other app also provides a function for sending, for example, a print job for causing the communication apparatus 151 to print the downloaded predetermined image data. Here, the predetermined image data is data for creating a paper craft, for example.

Although the present embodiment describes data for creating a paper craft as the predetermined image data as an example, the configuration is not limited thereto. The image data may be data for creating a New Year's card, a poster, a label, a postcard, a business card, or the like.

The home screen 710 displayed by the communication app in step S416 will be described next with reference to FIG. 7B. Descriptions corresponding to those given of the home screen 600 in FIG. 6 and the home screen 700 in FIG. 7A will be omitted here.

An interface capable of accepting an instruction to execute the app launching function described with reference to the home screen 700 (a launch app button 707) is not displayed in the home screen 710 illustrated in FIG. 7B. In this manner, the communication app performs display control for changing the interface displayed in the home screen on the basis of a list of models supported by another app included in the file downloaded from the external server 171.

### Registration Processing

Next, the registration processing executed by the communication app in step S411 will be described with reference to FIGS. 8A and 8B. FIGS. 8A and 8B are flowcharts illustrating an example of the registration processing executed by the communication app. In this flowchart, the processing executed by the communication app is realized by, for example, the CPU 103 loading a control program stored in a memory such as the ROM 104 into the RAM 105 and executing the program. The processing illustrated in FIGS. 8A and 8B may be executed when, for example, the communication app has been installed in the information processing apparatus 101 through a user operation and is launched for the first time.

In step S801, the communication app searches for the communication apparatus 151 on the network to which the information processing apparatus 101 belongs. Specifically, in step S801, the communication apparatus 151 is searched for by instructing the OS to broadcast a signal requesting a response from the communication apparatus 151 over the network to which the information processing apparatus 101 belongs, for example. The signal requesting the response from the communication apparatus 151 includes information indicating the communication apparatus 151 that supports the communication app, for example. Specifically, the signal is a packet, for example. The packet may include, for example, the IP address of the communication apparatus 151 that supports the communication app, stored in advance in the communication app.

In step S802, the communication app determines whether the communication apparatus 151 on the network to which the information processing apparatus 101 belongs has been discovered. If the communication app determines that the communication apparatus 151 has been discovered, the sequence moves to step S803. However, if the communication app determines that the communication apparatus 151 has not been discovered, the sequence moves to step S804.

Specifically, upon receiving a response from the communication apparatus 151 as a result of the search for the communication apparatus 151 in step S801, the communication app determines that the communication apparatus 151 has been discovered. For example, when the communication apparatus 151 and the access point 131 are already connected in response to a user operation or the like, the communication apparatus 151 is determined to have been discovered by the communication app in step S802. In other words, this is a state in which the information processing apparatus 101 and the communication apparatus 151 are both connected to the access point 131, and corresponds to the infrastructure connection mentioned above. Additionally, for example, when the information processing apparatus 101 and the communication apparatus 151 are already connected directly in response to a user operation or the like, the communication apparatus 151 is determined to have been discovered by the communication app in step S802. On the other hand, if a response has not been received from the communication apparatus 151, the communication app determines that the communication apparatus 151 cannot be discovered.

In step S803, the communication app performs processing for registering the communication apparatus 151 with the communication app. Specifically, for example, the communication app requests information pertaining to the communication apparatus 151 from the discovered communication apparatus 151, and obtains the information pertaining to the communication apparatus 151. The communication app also stores the obtained information pertaining to the communication apparatus 151. The information pertaining to the communication apparatus 151 includes, for example, capability information of the communication apparatus 151, a MAC address of the communication apparatus 151, model information of the communication apparatus 151, and the like. Specifically, the capability information of the communication apparatus 151 includes a list of information on the functions supported by the communication apparatus 151, information on consumables (ink, paper, and the like) that can be used by the communication apparatus 151, information indicating the printing method used by the communication apparatus 151, and the like. In this manner, the communication app can perform the home screen display control described above by obtaining information pertaining to the communication apparatus 151 in step S803.

The communication app stores information indicating the communication mode at the time of the registration in step S803. For example, when information pertaining to the communication apparatus 151 is obtained from the communication apparatus 151 over an infrastructure connection, the communication app stores information indicating that the communication apparatus 151 has been registered over an infrastructure connection. On the other hand, for example, when information pertaining to the communication apparatus 151 is obtained from the communication apparatus 151 over a direct connection, the communication app stores information indicating that the communication apparatus 151 has been registered over a direct connection.

The MAC address for an infrastructure connection or a direct connection with the communication apparatus 151 is included in the information pertaining to the communication apparatus 151 obtained by the communication app from the communication apparatus 151 in step S803. The MAC address for an infrastructure connection with the communication apparatus 151 is different from the MAC address for a direct connection with the communication apparatus 151. Additionally, when registering the communication apparatus 151 in the infrastructure connection, the communication app may store the SSID of the access point 131 to which the information processing apparatus 101 is connected.

In step S804, the communication app makes a notification to prompt the user to operate the communication apparatus 151 in the network setup mode. For example, the communication app may display a message or the like in the console unit 108 prompting the communication apparatus 151 to be operated in the network setup mode.

When set to the network setup mode, the communication apparatus 151 operates as a network setup access point (connection configuration AP, setup access point), as described above. Additionally, the communication apparatus 151 can send identification information, a password, and the like of the communication apparatus 151 to the information processing apparatus 101. The identification information of the communication apparatus 151 includes information such as the SSID, the manufacturer's name, the serial number, the model name, and the like.

In step S805, the communication app searches for the communication apparatus 151 in the network setup mode using the communication unit 109, the short-range wireless communication unit 110, and the like. The communication app displays the search results in the console unit 108. For example, the communication app may display, in the console unit 108 or the like, an interface capable of accepting an instruction to select the communication apparatus 151 from the search results displayed in the console unit 108.

In step S806, the communication app establishes a connection with the communication apparatus 151 for which the selection instruction has been accepted from the search results displayed in step S805. Here, the communication apparatus 151 is operating in the network setup mode, and thus the password of the communication apparatus 151 may be unnecessary when connecting the information processing apparatus 101 to the network formed by the communication apparatus 151.

In step S807, the communication app sends a request for a list of access points around the communication apparatus 151 to the communication apparatus 151 with which the connection has been established in step S806. The communication app receives the list of access points from the communication apparatus 151.

In step S808, the communication app displays the list of access points received from the communication apparatus 151 in the console unit 108 or the like. For example, the communication app displays, in the console unit 108 or the like, an interface (not shown) capable of accepting an instruction to select the access point. For example, the communication app displays an interface (not shown) capable of accepting an instruction to select whether the user's desired access point is present in the list.

In step S809, the communication app determines whether the user's desired access point is present in the list displayed in step S808. If the communication app determines that the desired access point is present, the sequence moves to step S810. On the other hand, if the communication app determines that the desired access point is not present, the sequence moves to step S816. For example, the communication app makes this determination on the basis of a user operation in an interface capable of accepting an instruction to select whether the user's desired access point displayed is present in the list displayed in step S808. The following will describe a case where the user's desired access point is present (Yes in S809) and a case where the user's desired access point is not present (No in S809).

### When User's Desired Access Point is Present (Yes in Step S809)

In step S810, the communication app accepts the input of the password of the access point for which the selection instruction has been accepted. The following will describe, as an example, a case where the access point 131 has been selected by the user from the list of access points displayed in step S808. In step S810, the communication app may display, in the console unit 108, an interface capable of accepting the input of the password of the access point 131, for example. If the settings of the access point 131 are settings that enable connections to the access point 131 without a password, this step may be skipped, and the sequence may move to step S811.

In step S811, the communication app sends connection information for the access point 131 for which the selection instruction has been accepted, such as the password and the SSID, to the communication apparatus 151. The communication app sends, to the communication apparatus 151, a connection request for a connection to the access point 131 for which the selection instruction has been accepted. In other words, the communication app sends information the communication apparatus 151 to join the network formed by the access point 131. If the settings of the access point 131 are settings that enable connections to the access point 131 without a password, only a connection request to the access point 131 need be sent to the communication apparatus 151.

In step S812, the communication app cuts off the connection between the information processing apparatus 101 and the communication apparatus 151. Note that after the connection between the information processing apparatus 101 and the communication apparatus 151 in the network setup mode is cut off by the communication app, a connection between the information processing apparatus 101 and the access point 131 is established by a reconnection function of the OS of the information processing apparatus 101. The reconnection function is a function that is automatically executed regardless of instructions from the communication app. The access point 131 reconnected through the reconnection function of the OS is an access point corresponding to the connection information held by the OS, and is an access point to which the information processing apparatus 101 has connected in the past.

In step S813, the communication app searches for the communication apparatus 151 on the network formed by the access point 131 to which the information processing apparatus 101 is connected. Specifically, for example, the communication app requests a response from the communication apparatus 151 by specifying identification information of the communication apparatus 151 (a device name, a serial number, or the like) and broadcasting the information over the network formed by the access point 131.

In step S814, the communication app determines whether the communication apparatus 151 has been discovered in the processing performed in step S813. If the communication app determines that the communication apparatus 151 has been discovered, the sequence moves to the processing of step S803. However, if the communication app determines that the communication apparatus 151 has not been discovered, the sequence moves to the processing of step S815. Specifically, upon receiving a response from the communication apparatus 151 as a result of the search for the communication apparatus 151 in step S813, the communication app determines that the communication apparatus 151 has been discovered. On the other hand, if a response has not been received from the communication apparatus 151, the communication app determines that the communication apparatus 151 cannot be discovered.

The processing of step S803 performed when the processing of steps S802 to S814 has been executed is the same as the processing of step S803 performed when the information processing apparatus 101 and the communication apparatus 151 are determined to have been discovered in step S802 while in an infrastructure connection ("Yes" in step S802), and will therefore not be described here.

In step S815, the communication app makes a notification indicating that the network to which the information processing apparatus 101 belongs is different from the network to which the communication apparatus 151 belongs. For example, the communication app may display, in the console unit 108 or the like, a message indicating that the network to which the information processing apparatus 101 belongs is different from the network to which the communication apparatus 151 belongs.

### When User's Desired Access Point is Not Present (No in Step S809)

In step S816, the communication app sends a request for the connection information of the communication apparatus 151 to the communication apparatus 151. The communication app receives the connection information of the communication apparatus 151 from the communication apparatus 151. Here, the connection information of the communication apparatus 151 is a password, an SSID, or the like, for example.

In step S817, the communication app cuts off the connection between the information processing apparatus 101 and the communication apparatus 151 operating in the network setup mode. The communication app also makes a notification prompting a connection between the information processing apparatus 101 and the communication apparatus 151. For example, the communication app may display a message in the console unit 108 indicating that the information processing apparatus 101 and the communication apparatus 151 are to be connected. Notifying the user in this manner makes it possible to prompt the user to establish a connection between the information processing apparatus 101 and the communication apparatus 151 through a direct connection, as described above.

In step S813, the communication app searches for the communication apparatus 151 on the network to which the information processing apparatus 101 belongs.

In step S814, the communication app determines whether the communication apparatus 151 has been discovered in the processing performed in step S813. If the communication app determines that the communication apparatus 151 has been discovered, the sequence moves to the processing of step S803. However, if the communication app determines that the communication apparatus 151 has not been discovered, the sequence moves to the processing of step S815.

The processing of step S803 performed when the processing of steps S802 to S814 has been executed is the same as the processing of step S803 performed when the information processing apparatus 101 and the communication apparatus 151 are determined to have been discovered in step S802 while in a direct connection ("Yes" in step S802), and will therefore not be described here.

In step S815, the communication app makes a notification indicating that the network to which the information processing apparatus 101 belongs is different from the network to which the communication apparatus 151 belongs. For example, the communication app may display, in the console unit 108 or the like, a message indicating that the network to which the information processing apparatus 101 belongs is different from the network to which the communication apparatus 151 belongs.

### Example of Processing when Communication App Runs in Second Environment

Processing performed when the communication app runs in the second environment will be described next. Note that when the communication app is running in the second environment and the processing is executed through the OS of the information processing apparatus 101, the OS is, for example, the guest OS (the virtual Android OS).

In step S401, the communication app performs the same processing as when the communication app is running in the first environment, and thus the processing will not be described here.

In step S402, the communication app determines whether the communication app is running in the second environment. Here, it is assumed that the communication app runs in the second environment. Accordingly, the following will describe a case where in step S402 of this example, the communication app is determined to be running in the second environment, and the sequence moves to step S417.

It can be said that in step S402, the communication app determines the operating environment of the communication app, and if the determination result indicates the first environment, the processing of step S420 (described later) is executed; whereas if the communication app is on the second OS operating as the host OS and is in the second operating environment, the processing is switched to execute step S420 (described later).

In step S417, the communication app attempts to obtain the IP address of the information processing apparatus 101. For example, the communication app attempts to obtain the IP address of the information processing apparatus 101 though a first method. The "first method" can be called a method that uses a first API, and an IP address obtained through the first method will be called a "first IP address" hereinafter.

The first API is an API for obtaining, from the host OS, information specified by the communication app as information to be obtained. In other words, in step S417, the communication app specifies the IP address of the Wi-Fi network interface managed by the Chrome OS (the second OS), which is the host OS in the second environment, as the information to be obtained, and executes the first API. In other words, the first IP address is the IP address of the Wi-Fi network interface managed by the Chrome OS (the second OS), which is the host OS in the second environment. Specifically, by executing the first API, the communication app instructs the guest OS to obtain the first IP address. Upon accepting the instruction to obtain the first IP address from the communication app, the guest OS instructs the host OS to obtain the first IP address. As a result, the guest OS obtains the first IP address from the host OS. The guest OS then sends the first IP address to the communication app. In this manner, the communication app can obtain the IP address assigned to the actual Wi-Fi network interface, rather than the IP address assigned to the virtual Wi-Fi network interface, from the host OS via the guest OS. In other words, the communication app can obtain an IP address assigned by an apparatus to which the information processing apparatus 101 is connected over Wi-Fi, and which is an external apparatus operating as an access point.

The first API may also be, for example, an API that specifies and configures processing executed by the OS. Specifically, the first API may be of a class for starting an external process from the communication app. The "external process" is an external command or program. For example, the class for launching an external process from the communication app may use a command called ProcessBuilder()#command(). For example, the communication app may specify "/system/bin/getprop" and "arc.net.ipv4.host_address" as arguments using the command ProcessBuilder()#command(). "/system/bin/getprop" is a command for confirming the system properties. "arc.net.ipv4.host_address" is an argument used when the command is executed, and is used when the communication app specifies the information to be obtained.

In step S418, the communication app determines whether the first IP address has been successfully obtained. If the communication app determines that the first IP address has been successfully obtained, the sequence moves to step S420. However, if the communication app determines that the first IP address has not been successfully obtained, the sequence moves to step S419.

In step S419, the communication app obtains a gateway address from the information processing apparatus 101. The gateway address is, for example, the IP address of an external apparatus that relays between its own network and an external network. In other words, the gateway address is the IP address of an external apparatus which forms a network to which the information processing apparatus 101 belongs and which operates as an access point.

In step S419, for example, the communication app obtains the gateway address through a second method different from the first method. The "second method" can be called a method that uses a second API different from the first API, and an IP address obtained through the second method will be called a "second IP address" hereinafter.

The second API is an API for obtaining, from the host OS, information specified by the communication app as information to be obtained. In other words, in step S419, the communication app specifies the IP address of the Wi-Fi network interface (gateway) managed by the Chrome OS (the second OS), which is the host OS in the second environment, as the information to be obtained, and executes the second API. In other words, the second IP address is the IP address of the Wi-Fi network interface (gateway) managed by the Chrome OS (the second OS), which is the host OS in the second environment. Specifically, by executing the second API, the communication app instructs the guest OS to obtain the second IP address. Upon accepting the instruction to obtain the second IP address from the communication app, the guest OS instructs the host OS to obtain the second IP address. As a result, the guest OS obtains the second IP address from the host OS. The guest OS then sends the second IP address to the communication app. In this manner, the communication app can obtain the IP address of the actual Wi-Fi network interface (gateway), rather than the IP address assigned to the virtual Wi-Fi network interface, from the host OS via the guest OS. In other words, the communication app can obtain an IP address of an apparatus to which the information processing apparatus 101 is connected over Wi-Fi, and which is an external apparatus operating as an access point.

The second API may also be, for example, an API that specifies and configures processing executed by the OS. Specifically, the second API may be of a class for starting an external process from the communication app. The "external process" is an external command or program. For example, the class for launching an external process from the communication app may use a command called ProcessBuilder()#command(). For example, the communication app may specify "/system/bin/getprop" and "arc.net.ipv4.host_gateway" as arguments using the command ProcessBuilder()#command(). "/system/bin/getprop" is a command for confirming the system properties. "arc.net.ipv4.host_gateway" is an argument used when the command is executed, and is used when the communication app specifies the information to be obtained.

In step S420, the communication app determines whether the information processing apparatus 101 belongs to the network of the communication apparatus 151. In other words, in step S420, the communication app determines the network of the information processing apparatus 101. If the communication app determines that the information processing apparatus 101 belongs to the network of the communication apparatus 151, the sequence moves to step S410. However, if the communication app determines that the information processing apparatus 101 does not belong to the network of the communication apparatus 151, the sequence moves to step S403.

In other words, as described above, when the communication app is in the first environment (NO in step S402), the communication app controls communication with the external server. On the other hand, as described above, in a state where the information processing apparatus 101 belongs to the network formed by the communication apparatus 151, communication with the external server may fail. Furthermore, when the communication app is running in the second environment, it may take time to determine an error, i.e., whether the communication has failed. When the communication app is running in the second environment, and the information processing apparatus 101 belongs to the network formed by the communication apparatus 151, the communication app performs control not to execute communication with the external server. Such a configuration makes it possible to eliminate the time taken to execute communication with an external server.

Here, the case where the information processing apparatus 101 belongs to the network of the communication apparatus 151 is a case where the information processing apparatus 101 and the communication apparatus 151 are connected directly over Wi-Fi without going through an external access point, as described above. In other words, the processing of step S420 is also processing for determining whether the information processing apparatus 101 is connected to the Wi-Fi network formed by the communication apparatus 151 without going through the external access point 131. That is, it can also be said that the processing of step S420 determines whether the information processing apparatus 101 is directly connected to the communication apparatus 151.

The case where the information processing apparatus 101 does not belong to the network of the communication apparatus 151 is a case where the information processing apparatus 101 belongs to the Wi-Fi network formed by the external access point 131. In other words, the processing of step S420 is also processing for determining whether the information processing apparatus 101 belongs to the Wi-Fi network formed by the external access point 131. That is, it can also be said that the processing of step S420 determines whether the mode of communication between the information processing apparatus 101 and the communication apparatus 151 is an infrastructure connection. Note that the case where the information processing apparatus 101 does not belong to the network of the communication apparatus 151 can include cases where the information processing apparatus 101 is not connected to any Wi-Fi network.

Specifically, in step S420, for example, the communication app determines whether the information processing apparatus 101 belongs to the network of the communication apparatus 151 using either the first IP address obtained through the processing of step S402 or the second IP address obtained through the processing of step S403. Specifically, for example, the communication app compares either the first IP address or the second IP address with the IP address of the communication apparatus 151, held in advance from the time the communication app was installed in the information processing apparatus 101, and makes the determination on the basis of the result of the comparison. In the following descriptions, the IP address of the communication apparatus 151 held in advance since the communication app was installed in the information processing apparatus 101 will be called a "third IP address". As described above, the IP address managed by the host OS of the information processing apparatus 101 includes the first IP address assigned by the apparatus currently connected, and the second IP address of the apparatus currently connected. The present embodiment assumes that if the information processing apparatus 101 and the communication apparatus 151 are connected directly over Wi-Fi, the communication apparatus 151 assigns the third IP address to the information processing apparatus 101. As such, in a state where the information processing apparatus 101 belongs to the network of the communication apparatus 151, the first IP address obtained in step S417 is assigned by the communication apparatus 151. The second IP address obtained in step S418 is the third IP address of the communication apparatus 151. The communication app can therefore determine whether the information processing apparatus 101 belongs to the network of the communication apparatus 151 by comparing either the first IP address or the second IP address with the third IP address held in advance.

Specifically, for example, in step S420, the communication app compares the network part of the first IP address or the second IP address with the network part of the IP address of the communication apparatus 151, and determines whether those network parts are the same. If the network parts of the IP addresses are determined to be the same, the information processing apparatus 101 can determine that the information processing apparatus 101 belongs to the network of the communication apparatus 151. However, if the network parts of the IP addresses are determined to be different, the information processing apparatus 101 can determine that the information processing apparatus 101 does not belong to the network of the communication apparatus 151. Note that in step S420, the communication app may make the determination by comparing the IP addresses as a whole, rather than comparing the network parts of the IP addresses.

Of the network part and the host part of the IP address of the communication apparatus 151, the network part may be unique to the provider (vendor) of the communication apparatus 151. The network part is information identifying the network to which the apparatus belongs. The host part is information for identifying apparatuses belonging to a network.

The processing performed after step S403 when the communication app determines that the information processing apparatus 101 does not belong to the network of the communication apparatus 151 in step S420, and the sequence then moves to step S403, is the same as when the communication app runs in the first environment.

Additionally, with respect to the processing performed after step S410 when the communication app determines that the information processing apparatus 101 belongs to the network of the communication apparatus 151 in step S420, and the sequence then moves to step S410, descriptions that are the same as when the communication app runs in the first environment will be omitted.

The case where the communication app determines in step S420 that the information processing apparatus 101 belongs to the network of the communication apparatus 151, and the processing of step S414 is then executed after the processing of steps S410 to step S412, will be described next. In this case, the communication app does not download a file from the external server 171 through the OS of the information processing apparatus 101. However, there are situations where, for example, at a launch previous to the current launch, the communication app determines in step S420 that the information processing apparatus 101 does not belong to the network of the communication apparatus 151. In such a case, as a result of the attempt to download the file from the external server 171 in step S403, the communication app may store the file in step S406. In other words, in step S420, the communication app determines that the information processing apparatus 101 belongs to the network of the communication apparatus 151, and when executing the processing of step S414 thereafter, the communication app refers to whether a file is stored in a memory such as the ROM 104. If a file is stored, the communication app determines whether the communication apparatus 151 being registered is a model supported by another app different from the communication app, on the basis of the file and the information pertaining to the communication apparatus 151 to be registered.

Although the present embodiment describes a configuration in which the sequence moves to step S410 when the communication app determines that the information processing apparatus 101 belongs to the network of the communication apparatus 151, the configuration is not limited thereto. For example, if the communication app determines that the information processing apparatus 101 belongs to the network of the communication apparatus 151, the processing of steps S410 to S414 may be skipped, and the sequence may move to step S416. Additionally, although the foregoing has described a configuration in which both the processing pertaining to the consent screen (steps S407 to S409) and the processing pertaining to the home screen (steps S410 to S416) are executed as the processing executed when the app is launched, the configuration is not limited thereto. For example, only one of the processing pertaining to the consent screen and the processing pertaining to the home screen may be executed when the app is launched. In other words, only one of the processing pertaining to the consent screen and the processing pertaining to the home screen may be executed as the processing based on the file downloaded from the external server 171. Furthermore, although the foregoing has described a configuration in which the processing of steps S418 and S419 is executed after the processing of step S417, the configuration is not limited thereto. The processing of steps S418 and S419 may be omitted. In other words, the sequence may move to step S420 immediately after the processing of step S417. Additionally, if the communication app does not switch the display content between a screen for an ink jet printer and a screen for an electrophotographic printer, the processing of step S412 may be omitted. In other words, the sequence may move directly to step S414 after the processing of step S410 or after the processing of step S411.

As described above, according to the present embodiment, when the communication app is running in the first environment, the communication app controls communication with the external server through the OS of the information processing apparatus 101. However, when the communication app is running in the second environment, and the information processing apparatus 101 belongs to the network formed by the communication apparatus 151, the communication app performs control not to execute communication with the external server. Such a configuration makes it possible to execute communication with an external server and eliminate time taken by errors in that communication when the communication app is running in the second environment. In other words, it is possible to improve the convenience of a program that can run in an operating environment that is on an OS running as a host OS and that is on a guest OS.

### Second Embodiment

A second embodiment will be described hereinafter, focusing on differences from the first embodiment. In the first embodiment, when a launch instruction is received, the communication app determined the operating environment and switched whether to determine the network to which the information processing apparatus 101 belongs. Additionally, the first embodiment described, as an example, that the communication with the external server 171 for information processing through the OS is communication for downloading a file. In the present embodiment, when the selection of a file to be uploaded is accepted, the communication app determines the operating environment and switches whether to execute the determination of the network to which the information processing apparatus 101 belongs. The present embodiment will describe a configuration that includes communication for uploading a file.

### Example of Processing by Communication App

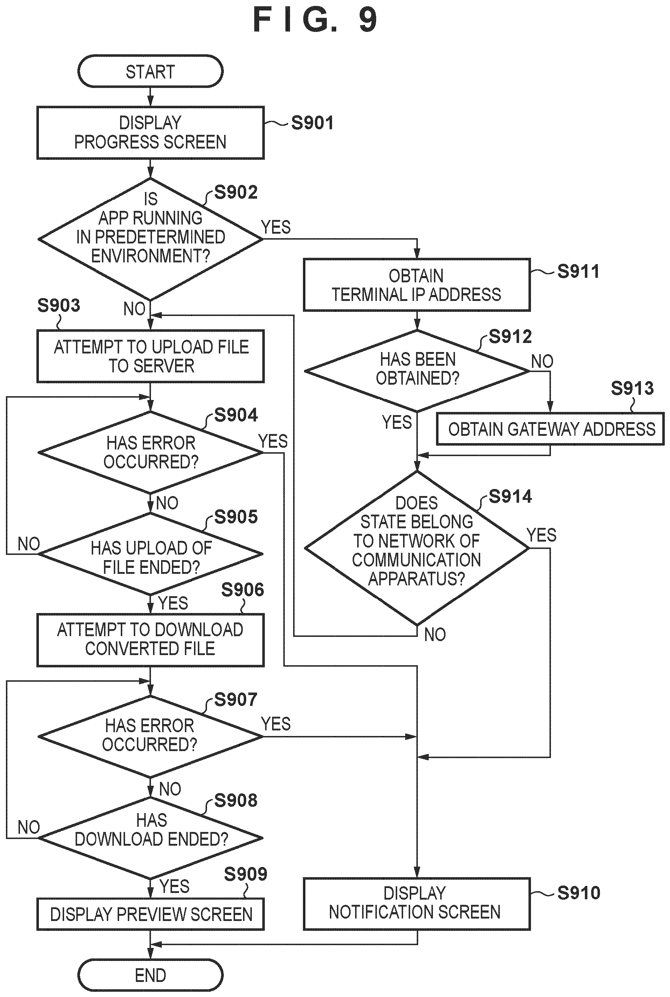

Refer to FIG. 9. FIG. 9 is a flowchart illustrating an example of processing executed by the communication app. In this flowchart, the processing executed by the communication app is realized by, for example, the CPU 103 loading a control program stored in a memory such as the ROM 104 into the RAM 105 and executing the program.

The processing of FIG. 9 is executed when the communication app accepts an instruction to select the file to be uploaded, for example. Additionally, the processing of FIG. 9 may be executed when an instruction to execute the print job sending function is accepted, for example. Note that in the present embodiment, the file to be uploaded may be a document file or an image file, for example. Additionally, in the present embodiment, a photo print button (not shown) may be displayed in the home screen (not shown) displayed by the communication app, for example. The photo print button (not shown) is an interface capable of accepting an instruction to execute the print job sending function for an image file (a photo printing function), for example. The image file is a file in a data format corresponding to the print job sending function.

When the communication app is running in the first environment, the data format corresponding to the image file is, for example, a data format corresponding to Joint Photographic Experts Group ("JPEG", hereinafter), a data format corresponding to the Graphics Interchange Format ("GIF", hereinafter), a data format corresponding to Portable Network Graphics ("PNG", hereinafter), a data format corresponding to Microsoft Windows Bitmap Image ("bmp", hereinafter), a data format corresponding to the High Efficiency Image File Format ("HEIF", hereinafter), or the like.

When the communication app is running on the second OS, the data format corresponding to the image file (the data format which the communication app is capable of printing using the photo printing function) is, for example, a data format corresponding to JPEG, a data format corresponding to GIF, a data format corresponding to PNG, a data format corresponding to bmp, or the like. Note that the data format is not limited to these, and may be another data format.

The processing illustrated in FIG. 9, performed when the communication app is installed and run in both the first environment and the second environment, will be described hereinafter.

### Example of Processing when Communication App Runs in First Environment

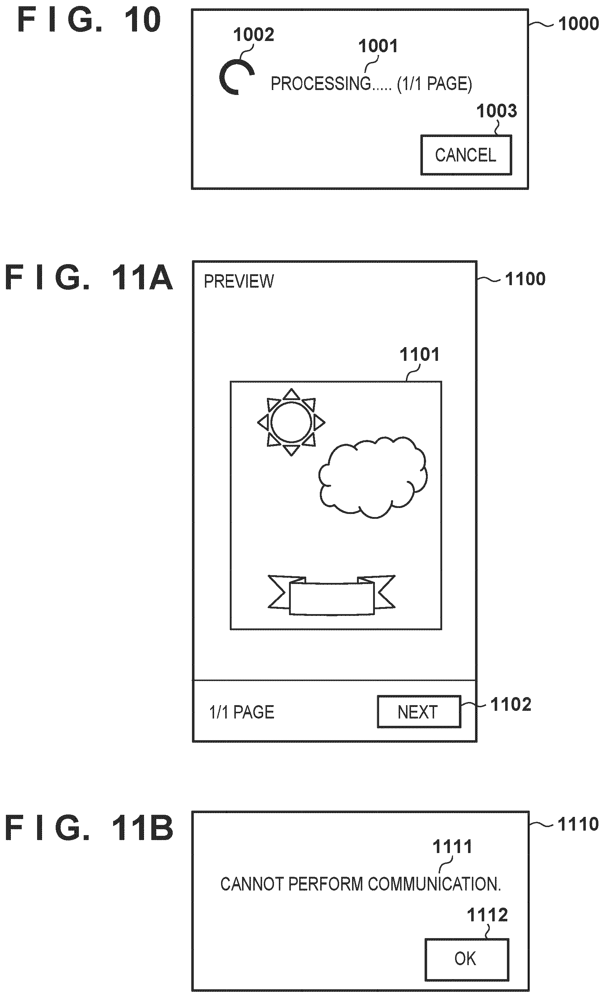

In step S901, the communication app displays, in the console unit 108, a progress screen on the basis of having received an instruction to execute communication. Here, the descriptions will refer to FIG. 10. FIG. 10 illustrates an example of a progress screen 1000 displayed by the communication app in step S901. A message 1001 indicating that processing based on accepting an instruction to communicate is being executed, an icon 1002 indicating the execution status of the processing, an interface 1003 capable of accepting the instruction to cancel the processing, and the like, for example, are displayed in the progress screen 1000.

In step S902, the communication app determines whether the communication app is running in the second environment. If the communication app determines that the communication app is running in the second environment, the sequence moves to step S903. However, if the communication app determines that the communication app is not running in the second environment, the sequence moves to step S911. The processing of step S902 is similar to that of step S402, and will therefore not be described. Here, it is assumed that the communication app runs in the first environment. Accordingly, the following will describe a case where in step S902 of this example, the communication app is determined not to be running in the second environment, and the sequence moves to step S903.

In step S903, the communication app communicates with the external server 171 through the OS of the information processing apparatus 101. In the present embodiment, the communication is communication for uploading a file to the external server 171.

The file that the communication app uploads to the server may be a document file or an image file, for example, as described above.

In step S904, the communication app determines whether an error has occurred as a result of the attempt to upload the file. If the communication app determines that an error has occurred, the sequence moves to step S910. However, if the communication app determines that an error has not occurred, the sequence moves to step S905. Specifically, the communication app makes this determination on the basis of whether an error has occurred from the OS of the information processing apparatus 101.

In step S905, the communication app determines whether the upload of the file has ended. If the communication app determines that the upload has ended, the sequence moves to step S906. However, if the communication app determines that the upload has not ended, the sequence moves to step S904. Specifically, the communication app makes this determination on the basis of whether a notification that the upload has ended has been made from the OS of the information processing apparatus 101.

In step S906, the communication app communicates with the external server 171 through the OS of the information processing apparatus 101. In other words, in step S906, the communication app performs communication execution processing. In the present embodiment, the communication is communication for downloading a converted file from the external server 171. The external server performs conversion processing on the uploaded file, for example. The conversion processing may be processing by which the communication apparatus 151 convert the file into a data format which can be printed, for example. If the file and information pertaining to print settings have been uploaded, the conversion processing may be processing for converting the file into a file based on the print settings, for example.

In step S907, the communication app determines whether an error has occurred as a result of the attempt to download the converted file. If the communication app determines that an error has occurred, the sequence moves to step S910. However, if the communication app determines that an error has not occurred, the sequence moves to step S908. The determination in step S907 is made on the basis of whether a notification that an error has occurred has been made from the OS of the information processing apparatus 101, as in step S404.

In step S908, the communication app determines whether the download of the converted file has ended. If the communication app determines that the download has ended, the sequence moves to step S909. However, if the communication app determines that the download has not ended, the sequence moves to step S907. The determination in step S908 is made on the basis of whether a notification that the download has ended has been made from the OS of the information processing apparatus 101, as in step S405.

In step S909, the communication app displays a preview screen on the basis of the download of the converted file having ended. Here, the descriptions will refer to FIG. 11A. FIG. 11A illustrates an example of a preview screen 1100 displayed by the communication app in step S909. A print preview 1101, an OK button 1102, and the like are displayed in the preview screen 1100, for example. The print preview 1101 may display an image based on a file selected by the user, for example. The OK button 1102 may be an interface capable of accepting an instruction to send a print job to the communication apparatus 151, for example.

In step S910, the communication app displays a notification screen. Here, the descriptions will refer to FIG. 11B. FIG. 11B illustrates an example of a notification screen 1110 displayed by the communication app in step S910. A message 1111 indicating that communication with the external server 171 is not possible, an OK button 1112, and the like are displayed in the notification screen 1110, for example. Note that the message is not limited to the example illustrated here. A message indicating that an error has occurred during communication may be displayed in the notification screen 1110, for example. The OK button 1112 may be an interface capable of accepting an instruction to end the display of the notification screen 1110.

### Example of Processing when Communication App Runs in Second Environment

Processing performed when the communication app runs in the second environment will be described next.

In step S901, the communication app performs the same processing as when the communication app is running in the first environment, and thus the processing will not be described here.

In step S902, the communication app determines whether the communication app is running in the second environment. Here, it is assumed that the communication app runs in the second environment. Accordingly, the following will describe a case where in step S902 of this example, the communication app is determined to be running in the second environment, and the sequence moves to step S911.

The processing of steps S911 to S913 is similar to that of steps S417 to S419, and will therefore not be described. Note that the processing of steps S912 and S913 may also be omitted, in the same manner as the processing of steps S418 and S419.

In step S914, the communication app determines whether the information processing apparatus 101 belongs to the network of the communication apparatus 151. If the communication app determines that the information processing apparatus 101 belongs to the network of the communication apparatus 151, the sequence moves to step S910. However, if the communication app determines that the information processing apparatus 101 does not belong to the network of the communication apparatus 151, the sequence moves to step S903.

Note that this determination is made in the same manner as the processing of step S420, and will therefore not be described here. Additionally, the processing of steps S903 to S910 is similar to that performed when the communication app runs in the first environment, and will therefore not be described here.

As described above, according to the present embodiment, when a file to be uploaded is accepted, the communication app determines the operating environment of the communication app. When the communication app is running in the first environment, the communication app performs control to attempt to upload the file. However, when the communication app is running in the second environment, and the information processing apparatus 101 belongs to the network formed by the communication apparatus 151, the communication app performs control not to attempt to upload the file. Such a configuration makes it possible to attempt uploads to an external server and eliminate time taken by errors in that communication when the communication app is running in the second environment.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A method for controlling a first information processing apparatus (101) and a second information processing apparatus (101), the first information processing apparatus (101) having a predetermined program capable of running on an operating system (OS) and having a first operating environment that is on a first OS running as a host OS, but is not on a guest OS, and the second information processing apparatus (101) having the predetermined program and having a second operating environment that is on a second OS running as the host OS, and is also on the guest OS, the method comprising:
executing first processing in the first information processing apparatus (101) in a case where the predetermined program is running in the first operating environment, the first processing being processing for downloading predetermined information from an external server on the Internet;
executing the first processing in the second information processing apparatus (101) in a case where the predetermined program is running in the second operating environment, on the basis of the second information processing apparatus (101) not being in a directly-connected state that is a state of being connected to a communication apparatus without going through an external access point;
executing control for skipping execution of the first processing in the second information processing apparatus (101) in a case where the predetermined program is running in the second operating environment, on the basis of the second information processing apparatus (101) being in the directly-connected state;
executing second processing that is based on the predetermined information in the first information processing apparatus (101), in a case where the predetermined program is running in the first operating environment and the predetermined information has been downloaded through the first processing; and
executing the second processing in the second information processing apparatus (101) in a case where the predetermined program is running in the second operating environment and the predetermined information has been downloaded through the first processing.

2. The method according to claim 1, further comprising:
executing third processing in the second information processing apparatus (101) in a case where the predetermined program is running in the second operating environment, the third processing being processing for determining whether the second information processing apparatus (101) is in the directly-connected state,
wherein the first processing is executed in the second information processing apparatus (101) on the basis of the second information processing apparatus (101) being determined not to be in the directly-connected state as a result of executing the third processing, and
the control for skipping execution of the first processing is executed in the second information processing apparatus (101) on the basis of the second information processing apparatus (101) being determined to be in the directly-connected state as a result of executing the third processing.

3. The method according to claim 2,
where in the third processing includes fourth processing for obtaining an **IP** address, and
whether the second information processing apparatus (101) is in the directly-connected state is determined using the IP address obtained through the fourth processing.

4. The method according to claim 3,
wherein the fourth processing is processing for obtaining the IP address assigned to the second information processing apparatus (101) by an apparatus that forms a network to which the second information processing apparatus (101) belongs.

5. The method according to claim 3 or 4,
wherein whether the second information processing apparatus (101) is in the directly-connected state is determined by comparing the IP address obtained through the fourth processing with an IP address of the communication apparatus held in advance by the predetermined program.

6. The method according to any one of claims 3 to 5, further comprising:
executing fifth processing in a case where the IP address has not been obtained despite the fourth processing being executed, the fifth processing being processing for obtaining the IP address through a method different from a method executed in the fourth processing,
wherein in a case where the IP address has not been obtained despite the fourth processing being executed, whether the second information processing apparatus (101) is in the directly-connected state is determined using the IP address obtained through the fifth processing.

7. The method according to claim 6,
wherein the fifth processing is processing for obtaining an IP address of an apparatus connected to the second information processing apparatus (101).

8. The method according to claim 6 or 7,
wherein in a case where the IP address has been obtained through the fourth processing, whether the second information processing apparatus (101) is in the directly-connected state is determined by comparing the IP address obtained through the fourth processing with an IP address of the communication apparatus held in advance by the predetermined program, and
in a case where the IP address has not been obtained through the fourth processing, whether the second information processing apparatus (101) is in the directly-connected state is determined by comparing the IP address obtained through the fifth processing with the IP address of the communication apparatus held in advance by the predetermined program.

9. The method according to any one of claims 1 to 8,
wherein control is performed to skip execution of the second processing in a case where an error has occurred in downloading the predetermined information through the first processing, and
the second processing is executed in a case where an error has not occurred in downloading the predetermined information through the first processing,
in a case where the second information processing apparatus (101) is in the directly-connected state, the error occurs in downloading the predetermined information through the first processing.

10. The method according to any one of claims 1 to 9,
wherein the second processing is processing for displaying a consent screen for obtaining consent of a user to a privacy policy, and
the predetermined information includes a URL associated with a link button displayed in the consent screen.

11. The method according to any one of claims 1 to 9,
wherein the second processing is processing for determining whether the communication apparatus is a model corresponding to a specific program different from the predetermined program, and
the predetermined information includes information for determining whether the communication apparatus is the model corresponding to the specific program,
a first screen including a button for launching the specific program is displayed on the basis of the communication apparatus being determined to be the model corresponding to the specific program, and a second screen that does not include the button for launching the specific program is displayed on the basis of the communication apparatus being determined not to be the model corresponding to the specific program.

12. The method according to any one of claims 1 to 11,
wherein in a case where the predetermined program is running in the first operating environment, processing for determining whether the first information processing apparatus (101) is in the directly-connected state is controlled not to be executed in the first information processing apparatus (101) before the first processing.

13. The method according to any one of claims 1 to 12, further comprising:
executing registration processing in the first information processing apparatus (101) after the first processing is executed, in a case where the predetermined program is running in the first operating environment, the registration processing being processing for registering the communication apparatus in the predetermined program;
executing the registration processing in the second information processing apparatus (101) after the first processing is executed, in a case where the predetermined program is running in the second operating environment and the second information processing apparatus (101) is not in the directly-connected state; and
executing the registration processing in the second information processing apparatus (101) without executing the first processing, in a case where the predetermined program is running in the second operating environment and the second information processing apparatus (101) is in the directly-connected state.

14. The method according to any one of claims 1 to 13, further comprising:
sending, from the first information processing apparatus (101) to the communication apparatus, a print job for causing the communication apparatus to execute a print, in a case where the predetermined program is running in the first operating environment; and
sending, from the second information processing apparatus (101) to the communication apparatus, a print job for causing the communication apparatus to execute a print, in a case where the predetermined program is running in the second operating environment.

15. A predetermined program being a program capable of running on an operating system (OS),
the predetermined program causing a computer of a first information processing apparatus (101) having the predetermined program and a first operating environment that is on a first OS operating as a host OS but that is not on a guest OS to:
execute first processing in the first information processing apparatus (101) in a case where the predetermined program is running in the first operating environment, the first processing being processing for downloading predetermined information from an external server on the Internet; and
execute second processing that is based on the predetermined information in the first information processing apparatus (101), in a case where the predetermined program is running in the first operating environment and the predetermined information has been downloaded through the first processing, and
causing a computer of a second information processing apparatus (101) having the predetermined program and a second operating environment that is on a second OS operating as the host OS and that is on the guest OS to:
execute the first processing in the second information processing apparatus (101) in a case where the predetermined program is running in the second operating environment, on the basis of the second information processing apparatus (101) not being in a directly-connected state that is a state of being connected to a communication apparatus without going through an external access point;
execute control for skipping execution of the first processing in the second information processing apparatus (101) in a case where the predetermined program is running in the second operating environment, on the basis of the second information processing apparatus (101) being in the directly-connected state; and
execute the second processing in the second information processing apparatus (101) in a case where the predetermined program is running in the second operating environment and the predetermined information has been downloaded through the first processing.
